# EUROPEAN PATENT APPLICATION

(11) **EP 4 734 419 A1**
(43) Date of publication of application: **29.04.2026**
(21) Application number: 23941981.5
(22) Date of filing: 21.06.2023
(51) Int. Cl.: H04L 1/1812

(54) **INFORMATION PROCESSING METHOD, TERMINAL, NETWORK DEVICE, COMMUNICATION SYSTEM, AND STORAGE MEDIUM**

(71) Applicant: Beijing Xiaomi Mobile Software Co., Ltd., Beijing 100085 (CN)
(72) Inventor: ZHU, Yajun, Beijing 100085 (CN)
(74) Representative: Stöckeler, Ferdinand
(86) International application number: PCT/CN2023/101980
(87) International publication number: WO 2024/259710

(57) **Abstract**

The embodiments of the present disclosure relate to a method for processing information, a terminal, a network device, a communication system, and a storage medium. The information processing method comprises: after receiving first signaling and determining that an HARQ process is an HARQ-disabled state, the terminal determining, on the basis of received second signaling, that the state of the HARQ process is changed to an HARQ-enabled state; sending HARQ feedback information for the HARQ process; and after the HARQ feedback information is sent, detecting a first transmission channel. In this way, an occasion at which a terminal detects a first transmission channel is determined, such that the situation in which a network device which has not been subjected to detection sends data is prevented, thereby improving the system performance.

## Description

### FIELD

The present disclosure relates to the field of communication technologies, and in particular, to a method for processing information, a terminal, a network device, a communication system, and a storage medium.

### BACKGROUND

With the continuous development of wireless communication technology, transmission between a terminal and a network side has become a key research focus; however, it is unclear when a terminal should perform a detection of a related transmission channel in some scenarios.

### SUMMARY

Embodiments of the present disclosure are to solve the problem of when a terminal should perform a detection of a related transmission channel in some scenarios.

Embodiments of the present disclosure provide a method for processing information, a terminal, a network device, a communication system, and a storage medium.

According to a first aspect of embodiments of the present disclosure, a method for processing information is provided, including:
after a terminal receives first signaling and determines that a Hybrid Automatic Repeat reQuest (HARQ) process is in an HARQ disabled state, determining, based on received second signaling, that a state of the HARQ process is changed to an HARQ enabled state;
sending HARQ feedback information for the HARQ process; and
after sending the HARQ feedback information, detecting a first transmission channel.

According to a second aspect of embodiments of the present disclosure, a method for processing information is provided, including:
a network device sending a second signaling after sending first signaling; where the first signaling is for a terminal to determine that a HARQ process is in an HARQ disabled state, and the second signaling is used for the terminal to determine that a state of the HARQ process is changed to an HARQ enabled state;
receiving HARQ feedback information for the HARQ process; and
sending data in a first transmission channel.

According to a third aspect of embodiments of the present disclosure, a method for processing information is provided, including:
a network device sending a second signaling after sending first signaling;
after receiving the first signaling and determining that a HARQ process is in an HARQ disabled state, a terminal determining, based on received second signaling, that a state of the HARQ process is changed to an HARQ enabled state;
the terminal sending HARQ feedback information for the HARQ process to the network device;
the network device sending data in a first transmission channel; and
the terminal detecting the first transmission channel.

According to a fourth aspect of embodiments of the present disclosure, a terminal is provided, including:
a first processing module configured to, after receiving first signaling and determining that a HARQ process is in an HARQ disabled state, determine, based on received second signaling, that a state of the HARQ process is changed to an HARQ enabled state;
a first transceiver module configured to send HARQ feedback information for the HARQ process; and
the first processing module is further configured to, after sending the HARQ feedback information, detect a first transmission channel.

According to a fifth aspect of embodiments of the present disclosure, a network device is provided, including:
a second transceiver module configured to send second signaling after sending first signaling; where the first signaling is for a terminal to determine that a HARQ process is in an HARQ disabled state, and the second signaling is used for the terminal to determine that a state of the HARQ process is changed to an HARQ enabled state;
the second transceiver module is further configured to receive HARQ feedback information for the HARQ process; and
the second transceiver module is further configured to send data in a first transmission channel.

According to a sixth aspect of embodiments of the present disclosure, a terminal is provided, including: one or more processors; where the terminal is configured to perform the method of the first aspect.

According to a seventh aspect of embodiments of the present disclosure, a network device is provided, including: one or more processors; where the network device is configured to perform the method of the second aspect.

According to an eighth aspect of embodiments of the present disclosure, a communication system is provided, including: a terminal and a network device; where the terminal is configured to perform the method as described in the first aspect and the network device is configured to perform the method as described in the second aspect.

According to a ninth aspect of embodiments of the present disclosure, a storage medium is provided, where the storage medium stores instructions that, when executed on a communication device, cause the communication device to perform the method as described in the first aspect, the second aspect, the third aspect.

Embodiments of the present disclosure can clarify the timing issue for a terminal to detect a transmission channel.

### BRIEF DESCRIPTION OF THE DRAWINGS

In order to illustrate the technical solutions in the embodiments of the present disclosure more clearly, the following introduces the drawings required for describing the embodiments. The following drawings are merely some embodiments of the present disclosure and do not specifically limit the protection scope of the present disclosure.
FIG. 1A is a schematic structural diagram of an information processing system according to an embodiment of the present disclosure.
FIG. 1B is a schematic diagram illustrating a HARQ stalling problem according to an embodiment of the present disclosure.
FIG. 1C is a schematic diagram illustrating uplink and downlink timing alignment on a UE side according to an embodiment of the present disclosure.
FIG. 1D is a schematic diagram illustrating uplink and downlink timing misalignment on a UE side according to an embodiment of the present disclosure.
FIG. 2 is an interaction schematic diagram of a method for processing information according to an embodiment of the present disclosure.
FIG. 3A is a flowchart of a method for processing information according to an embodiment of the present disclosure.
FIG. 3B is a flowchart of a method for processing information according to an embodiment of the present disclosure.
FIG. 3C is a flowchart of a method for processing information according to an embodiment of the present disclosure.
FIG. 4A is a flowchart of a method for processing information according to an embodiment of the present disclosure.
FIG. 4B is a flowchart of a method for processing information according to an embodiment of the present disclosure.
FIG. 4C is a flowchart of a method for processing information according to an embodiment of the present disclosure.
FIG. 5 is a flowchart of a method for processing information according to an embodiment of the present disclosure.
FIG. 6A is a schematic diagram illustrating determination of a PDCCH detection timing according to an embodiment of the present disclosure.
FIG. 6B is a schematic diagram illustrating feedback of HARQ feedback information according to an embodiment of the present disclosure.
FIG. 6C is a schematic diagram illustrating feedback of HARQ feedback information according to an embodiment of the present disclosure.
FIG. 7A is a schematic structural diagram of a terminal according to an embodiment of the present disclosure.
FIG. 7B is a schematic structural diagram of a network device according to an embodiment of the present disclosure.
FIG. 8A is a schematic structural diagram of a communication device according to an embodiment of the present disclosure.
FIG. 8B is a schematic structural diagram of a chip according to an embodiment of the present disclosure.

### DETAILED DESCRIPTION

Embodiments of the present disclosure provide a method for processing information, a terminal, a network device, a communication system, and a storage medium.

According to a first aspect, an embodiment of the present disclosure provides a method for processing information, including:
after a terminal receives first signaling and determines that a Hybrid Automatic Repeat reQuest (HARQ) process is in an HARQ disabled state, determining, based on received second signaling, that a state of the HARQ process is changed to an HARQ enabled state;
sending HARQ feedback information for the HARQ process; and
after sending the HARQ feedback information, detecting a first transmission channel.

In the above embodiment, the timing for the terminal to perform a detection of the first transmission channel can be effectively clarified after the HARQ process state is configured to be the HARQ disabled state based on the first signaling and then configured to change to the HARQ enabled state via the second signaling, thereby reducing the occurrence of missed detection of data sent by the network device and improving system performance.

In the above embodiment, since the terminal can reduce the HARQ stalling problem when the HARQ process is in the HARQ disabled state, if the state changes from HARQ disabled to HARQ enabled, a detection of the first transmission channel can be performed after sending the HARQ feedback information for the HARQ process, without waiting for a certain time for detection which could cause missed detection; therefore, by configuring the terminal in the scenario where the HARQ process first is in the HARQ disabled state and then the HARQ process state is changed to the HARQ enabled state, the occurrence of HARQ stalling can be reduced while also reducing missed detection, thereby improving system performance.

In conjunction with the first aspect, in some embodiments, the first transmission channel is a Physical Downlink Control Channel (PDCCH).

In the above embodiment, missed detection of control information sent by the network device on the PDCCH can be reduced.

In conjunction with the first aspect, in some embodiments, the first signaling is Radio Resource Control (RRC) signaling; and the second signaling is Downlink Control Information (DCI).

In the above embodiment, the network device can accurately configure changing the state to the HARQ enabled state after the HARQ process is in the HARQ disabled state, which is beneficial for clarifying the terminal's behavior regarding the timing of detecting the first transmission channel in this scenario.

In conjunction with the first aspect, in some embodiments, detecting the first transmission channel after sending the HARQ feedback information includes one of:
detecting the first transmission channel after an end time of sending the HARQ feedback information; or
detecting the first transmission channel after a first time following an end time of sending the HARQ feedback information.

In the above embodiment, detection of the first transmission channel can be performed immediately after sending the HARQ feedback information, without waiting for additional time, thereby greatly reducing the probability of missed detection. Alternatively, a detection of the first transmission channel can also be performed after the first time following the HARQ feedback information, without waiting too long, thereby reducing the probability of missed detection to some extent while also reducing the terminal's detection time, i.e., reducing detection power consumption, etc.

In conjunction with the first aspect, in some embodiments, the first time is agreed by a protocol, or the first time is configured by a network device.

In the above embodiment, the first time can be determined in multiple ways, adapting to more application scenarios.

In conjunction with the first aspect, in some embodiments, the first time includes at least one of: a first duration; at least one subframe; at least one slot; and at least one symbol.

In the above embodiment, the first time can be determined as time units in multiple dimensions, which is beneficial for determining the terminal's detection timing in various scenarios.

In conjunction with the first aspect, in some embodiments, the method includes one of:
determining the HARQ feedback information based on a demodulation result of a Physical Downlink Shared Channel (PDSCH) scheduled for a single time; or
determining the HARQ feedback information based on demodulation results of the PDSCH scheduled for multiple times within a second time.

In the above embodiment, the HARQ feedback information can be accurately determined through the demodulation result of the scheduled PDSCH, and the HARQ feedback information can be determined in multiple ways. The determined HARQ feedback information can also help the network device configure appropriate transmission configurations for sending data, to reduce the probability of the terminal missing detection of the data.

In conjunction with the first aspect, in some embodiments, determining the HARQ feedback information based on the demodulation result of the PDSCH scheduled for a single time includes one of:
determining the HARQ feedback information including an Acknowledgement (ACK) in a case where the PDSCH scheduled for a single time is successfully demodulated; or
determining the HARQ feedback information including a Non-Acknowledgement (NACK) in a case where the PDSCH scheduled for a single time is unsuccessfully demodulated.

In the above embodiment, the HARQ feedback information can be accurately determined through the demodulation result of the PDSCH scheduled for a single time, which is beneficial for the network device to configure appropriate transmission configurations for sending data, helping to reduce the probability of the terminal missing detection of the data.

In conjunction with the first aspect, in some embodiments, determining the HARQ feedback information based on the demodulation results of the PDSCH scheduled for multiple times within the second time includes:
determining the HARQ feedback information including an ACK in a case where a probability of successfully demodulating the PDSCH scheduled for multiple times within the second time is greater than or equal to a threshold; or
determining the HARQ feedback information including a NACK in a case where a probability of successfully demodulating the PDSCH scheduled for multiple times within the second time is less than a threshold.

In the above embodiment, the HARQ feedback information can be accurately determined through the demodulation results of the PDSCH scheduled for multiple times within the second time, i.e., the HARQ feedback situation over a period of time can be determined, which is beneficial for the network device to configure appropriate transmission configurations for sending data, and helping to reduce the probability of the terminal missing detection of the data.

In conjunction with the first aspect, in some embodiments, the second time is agreed by a protocol, or the second time is configured by a network device.

In the above embodiment, the second time can be determined in multiple ways, adapting to more application scenarios.

In conjunction with the first aspect, in some embodiments, the HARQ feedback information is used for a network device to determine whether to adjust transmission configuration information; the transmission configuration information includes at least one of: a Modulation and Coding Scheme (MCS), a transmission resource size, and transmission power.

In the above embodiment, transmission configuration information suitable for current transmission can be determined through the HARQ feedback information.

In conjunction with the first aspect, in some embodiments, the method further includes one of:

determining first information based on a protocol agreement; where the first information is used to indicate a correspondence between the HARQ feedback information and transmission configuration information; or
receiving first information.

In the above embodiment, the correspondence between the HARQ feedback information and the transmission configuration information can be determined in multiple ways, adapting to more scenarios and also helping to accurately determine the HARQ feedback information to be sent.

In conjunction with the first aspect, in some embodiments, receiving the first information includes one of:
receiving a RRC signaling, where the RRC signaling includes the first information;
receiving a Media Access Control (MAC) Control Element (CE), where the MAC CE includes the first information; or
receiving a physical layer signaling, where the physical layer signaling includes the first information.

In the above embodiment, a RRC signaling, an MAC CE, and/or a physical layer signaling can be reused to carry the first information, thereby improving the utilization of these signalings.

According to a second aspect, an embodiment of the present disclosure provides a method for processing information, including:
a network device sending a second signaling after sending first signaling; where the first signaling is for a terminal to determine that a HARQ process is in an HARQ disabled state, and the second signaling is used for the terminal to determine that a state of the HARQ process is changed to an HARQ enabled state;
receiving HARQ feedback information for the HARQ process; and
sending data in a first transmission channel.

In conjunction with the second aspect, in some embodiments, the first transmission channel is a PDCCH.

In conjunction with the second aspect, in some embodiments, the first signaling is Radio Resource Control (RRC) signaling, and the second signaling is Downlink Control Information (DCI).

In conjunction with the second aspect, in some embodiments, the method further includes: determining an adjustment of transmission configuration information for the terminal based on the HARQ feedback information.

In the above embodiment, the network device can configure appropriate transmission configuration information, which is beneficial for the terminal to successfully detect data, thereby reducing the probability of missed detection.

In conjunction with the second aspect, in some embodiments, the HARQ feedback information includes one of:
an Acknowledgement (ACK), used to indicate that an adjustment of transmission configuration information is not needed; or
a Non-Acknowledgement (NACK), used to indicate that an adjustment of transmission configuration information is needed.

In conjunction with the second aspect, in some embodiments, the method further includes: sending first information, where the first information is used to indicate a correspondence between the HARQ feedback information and transmission configuration information.

In conjunction with the second aspect, in some embodiments, sending the first information includes one of:
sending RRC signaling, where the RRC signaling includes the first information;
sending a MAC CE, where the MAC CE includes the first information; or
sending a physical layer signaling, where the physical layer signaling includes the first information.

According to a third aspect, an embodiment of the present disclosure provides a method for processing information, including:
a network device sending a second signaling after sending first signaling;
after receiving the first signaling and determining that a HARQ process is in an HARQ disabled state, a terminal determining, based on received second signaling, that a state of the HARQ process is changed to an HARQ enabled state;
the terminal sending HARQ feedback information for the HARQ process to the network device;
the network device sending data in a first transmission channel; and
the terminal detecting the first transmission channel.

In conjunction with the third aspect, in some embodiments, the terminal detecting the first transmission channel includes one of:
the terminal detecting the first transmission channel after an end time of sending the HARQ feedback information; or
the terminal detecting the first transmission channel after a first time following an end time of sending the HARQ feedback information.

According to a fourth aspect, an embodiment of the present disclosure provides a terminal, including:
a first processing module configured to, after receiving first signaling and determining that a HARQ process is in an HARQ disabled state, determine, based on received second signaling, that a state of the HARQ process is changed to an HARQ enabled state;
a first transceiver module configured to send HARQ feedback information for the HARQ process; and
the first processing module is further configured to, after sending the HARQ feedback information, detect a first transmission channel.

According to a fifth aspect, an embodiment of the present disclosure provides a network device, including:
a second transceiver module configured to send second signaling after sending first signaling; where the first signaling is for a terminal to determine that a HARQ process is in an HARQ disabled state, and the second signaling is used for the terminal to determine that a state of the HARQ process is changed to an HARQ enabled state;
the second transceiver module is further configured to receive HARQ feedback information for the HARQ process; and
the second transceiver module is further configured to send data in a first transmission channel.

According to a sixth aspect, an embodiment of the present disclosure provides a terminal, including: one or more processors; where the terminal is configured to perform the method of the first aspect and optional implementations thereof.

According to a seventh aspect, an embodiment of the present disclosure provides a network device, including: one or more processors; where the network device is configured to perform the method of the second aspect and optional implementations thereof.

According to an eighth aspect, an embodiment of the present disclosure provides a communication system, including: a terminal and a network device; where the terminal is configured to perform the method as described in the first aspect and optional implementations thereof, and the network device is configured to perform the method as described in the second aspect and optional implementations thereof.

According to a ninth aspect, an embodiment of the present disclosure provides a storage medium, where the storage medium stores instructions which, when executed on a communication device, cause the communication device to perform the method as described in the first aspect, the second aspect, the third aspect, or optional implementations of the first aspect, the second aspect, and the third aspect.

According to a tenth aspect, an embodiment of the present disclosure provides a program product, where the program product, when executed by a communication device, causes the communication device to perform the method as described in the first aspect, the second aspect, the third aspect, or optional implementations of the first aspect, the second aspect, and the third aspect.

According to an eleventh aspect, an embodiment of the present disclosure provides a computer program which, when executed on a computer, causes the computer to perform the information processing method as described in the first aspect, the second aspect, the third aspect, or optional implementations of the first aspect, the second aspect, and the third aspect.

According to a twelfth aspect, an embodiment of the present disclosure provides a chip or a chip system; the chip or chip system includes processing circuitry configured to perform the method according to the first aspect, the second aspect, and the third aspect and optional implementations thereof.

It can be understood that the above terminal, network device, communication system, storage medium, program product, computer program, chip, or chip system are all used to perform the method provided by the embodiments of the present disclosure. Therefore, for the beneficial effects they can achieve reference can be made to the beneficial effects in the corresponding methods and details will not be repeated here.

Embodiments of the present disclosure provide a method for processing information, a terminal, a network device, a communication system, and a storage medium. In some embodiments, the term information processing method and communication method can be used interchangeably, the term information processing apparatus and communication apparatus can be used interchangeably, and the term information processing system and communication system can be used interchangeably.

The embodiments of the present disclosure are not exhaustive, but only illustrative of some embodiments, and do not specifically limit the protection scope of the present disclosure. In the absence of contradictions, each step in one embodiment can be implemented as an independent embodiment, and the steps can be combined arbitrarily. For example, the solution after removing some steps in an embodiment can also be implemented as an independent embodiment, and the order of the steps in an embodiment can be arbitrarily exchanged. In addition, optional implementations in an embodiment can be arbitrarily combined. Moreover, the embodiments can be arbitrarily combined. For example, parts or all of the steps of different embodiments can be arbitrarily combined, and optional implementations of one embodiment can be arbitrarily combined with other embodiments.

In various embodiments of the present disclosure, unless otherwise specified and unless there is a logical conflict, the terms and/or descriptions between the embodiments are consistent and can be used interchangeably. Technical features in different embodiments can be combined according to their inherent logical relationships to form new embodiments.

The terms used in the embodiments of the present disclosure are only for the purpose of describing specific embodiments and are not intended to limit the present disclosure.

In the embodiments of the present disclosure, unless otherwise stated, an element expressed in singular form, such as "a", "an", "the", "said", "the above", "the foregoing", "this", etc., may mean "one and only one", or may mean "one or more", "at least one", etc. For example, when an article such as "a", "an", "the" is used in translation, the noun following the article can be understood as singular or plural.

In the embodiments of the present disclosure, "a plurality" means two or more.

In some embodiments, the terms "at least one of", "one or more", "a plurality of", "multiple", etc. can be used interchangeably.

In some embodiments, expressions such as "at least one of A and B", "A and/or B", "in one case A, in another case B", "in response to one situation A, in response to another situation B", etc., may include the following technical solutions depending on the situation: in some embodiments, A (perform A regardless of B); in some embodiments, B (perform B regardless of A); in some embodiments, select to perform A or B (A and B are selectively performed); in some embodiments, both A and B (both A and B are performed). This is similar when there are more branches such as A, B, C, etc.

In some embodiments, expressions such as "A or B", etc., may include the following technical solutions depending on the situation: in some embodiments, A (perform A regardless of B); in some embodiments, B (perform B regardless of A); in some embodiments, select to perform A or B (A and B are selectively performed). This is similar when there are more branches such as A, B, C, etc.

Prefixes such as "first", "second", etc. in the embodiments of the present disclosure are only used to distinguish different described objects and do not constitute limitations on the position, order, priority, quantity, or content of the described objects. The description of the objects refers to the description in the claims or the context of the embodiments and should not be construed as additional limitations due to the use of prefixes. For example, if the described object is "field", the ordinal numbers before "field" in "first field" and "second field" do not limit the position or order between the "fields". "First" and "second" do not limit whether the "fields" they modify are in the same message, nor do they limit the sequence of "first field" and "second field". For another example, if the described object is "level", the ordinal numbers before "level" in "first level" and "second level" do not limit the priority between the "levels". For another example, the quantity of the described object is not limited by the ordinal numbers; it can be one or more. Taking "first device" as an example, the quantity of "device" can be one or more. In addition, objects modified by different prefixes can be the same or different. For example, if the described object is "device", "first device" and "second device" can be the same device or different devices, and their types can be the same or different. For another example, if the described object is "information", "first information" and "second information" can be the same information or different information, and their content can be the same or different.

In some embodiments, "include A", "comprise A", "used to indicate A", "carry A" can be interpreted as directly carrying A, or can be interpreted as indirectly indicating A.

In some embodiments, terms such as "in response to... ", "in response to determining... ", "in the case of...", "when...", "if...", etc. can be used interchangeably.

In some embodiments, terms such as "greater than", "greater than or equal to", "not less than", "more than", "more than or equal to", "not fewer than", "higher than", "higher than or equal to", "not lower than", "above", etc. can be used interchangeably. Terms such as "less than", "less than or equal to", "not greater than", "fewer than", "fewer than or equal to", "not more than", "lower than", "lower than or equal to", "not higher than", "below", etc. can be used interchangeably.

In some embodiments, an apparatus, etc. can be interpreted as physical or virtual, and its name is not limited to the names recorded in the embodiments. Terms such as "apparatus", "equipment", "device", "circuit", "network element", "node", "function", "unit", "section", "system", "network", "chip", "chip system", "entity", "subject", etc. can be used interchangeably.

In some embodiments, "network" can be interpreted as devices included in the network (e.g., access network devices, core network devices, etc.).

In some embodiments, terms such as "access network device (AN device)", "radio access network device (RAN device)", "base station (BS)", "radio base station", "fixed station", "node", "access point", "transmission point (TP)", "reception point (RP)", "transmission / reception point (TRP)", "panel", "antenna panel", "antenna array", "cell", "macro cell", "small cell", "femto cell", "pico cell", "sector", "cell group", "carrier", "component carrier", "bandwidth part (BWP)", etc. can be used interchangeably.

In some embodiments, terms such as "terminal", "terminal device", "user equipment (UE)", "user terminal", "mobile station (MS)", "mobile terminal (MT)", "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", etc. can be used interchangeably.

In some embodiments, an access network device, a core network device, or a network device may be replaced with a terminal. For example, the embodiments of the present disclosure may also be applied to a structure where communication between an access network device, a core network device, or a network device and a terminal is replaced with communication between multiple terminals (e.g., which may also be referred to as Device-to-Device (D2D), Vehicle-to-Everything (V2X), etc.). In this case, the structure may be such that the terminal has all or part of the functions of the access network device. Furthermore, terms such as "uplink", "downlink", etc. may also be replaced with terms corresponding to inter-terminal communication (e.g., "side"). For example, uplink channel, downlink channel, etc. may be replaced with sidelink channel; uplink, downlink, etc. may be replaced with sidelink.

In some embodiments, a terminal may be replaced with an access network device, a core network device, or a network device. In this case, the structure may be such that the access network device, core network device, or network device has all or part of the functions of the terminal.

In some embodiments, obtaining data, information, etc. may comply with the laws and regulations of the country where it is located.

In some embodiments, data, information, etc. may be obtained after obtaining user consent.

Furthermore, each element, each row, or each column in the tables of the embodiments of the present disclosure can be implemented as an independent embodiment. Any combination of elements, rows, or columns can also be implemented as an independent embodiment.

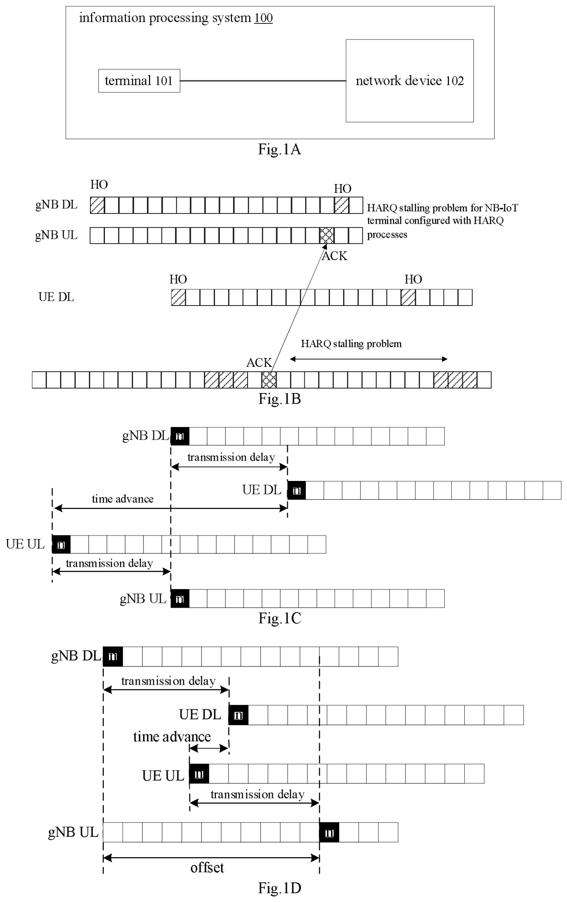

FIG. 1A is a schematic structural diagram of an information processing system 100 according to an embodiment of the present disclosure. As shown in FIG. 1A, the information processing system 100 may include: a terminal (terminal) 101 and a network device 102.

In some embodiments, the network device 102 may include at least one of an access network device and a core network device.

In some embodiments, the terminal 101 includes, for example, at least one of a mobile phone, a wearable device, an Internet of Things (IoT) device or terminal, a vehicle with communication capabilities, a smart vehicle, a tablet (Pad), a computer with wireless transceiver capabilities, a virtual reality (VR) terminal device, an augmented reality (AR) terminal device, a wireless terminal device in industrial control, a wireless terminal device in self-driving, a wireless terminal device in remote medical surgery, a wireless terminal device in a smart grid, a wireless terminal device in transportation safety, a wireless terminal device in a smart city, a wireless terminal device in a smart home, but is not limited thereto.

In some embodiments, an access network device is, for example, a node or device that connects a terminal to a wireless network. The access network device may include, but is not limited to, at least one of: an evolved NodeB (eNB) in a 5G communication system, a next generation evolved NodeB (ng-eNB), a next generation NodeB (gNB), a Node B (NB), a home NodeB (HNB), a home evolved NodeB (HeNB), a wireless backhaul device, a radio network controller (RNC), a base station controller (BSC), a base transceiver station (BTS), a baseband unit (BBU), a mobile switching center, a base station in a 6G communication system, an Open RAN, a Cloud RAN, a base station in other communication systems, an access node in a wireless fidelity (WiFi) system.

In some embodiments, the technical solution of the present disclosure may be applied to an Open RAN architecture. In this case, interfaces between access network devices or within an access network device involved in the embodiments of the present disclosure may become internal interfaces of Open RAN, and the procedures and information interactions between these internal interfaces may be implemented by software or programs.

In some embodiments, an access network device may be composed of a central unit (CU) and a distributed unit (DU), where the CU may also be called a control unit. Using a CU-DU structure can split the protocol layers of the access network device, placing the functions of some protocol layers under centralized control in the CU, and distributing the functions of the remaining part or all of the protocol layers in the DUs, with the CU centrally controlling the DUs, but is not limited thereto.

In some embodiments, a core network device may be one device, including a first network element, a second network element, etc., or may be multiple devices or device groups, each including all or part of the aforementioned first network element and other network elements. A network element may be virtual or physical. A core network includes, for example, at least one of an Evolved Packet Core (EPC), a 5G Core Network (5GCN), and a Next Generation Core (NGC).

It can be understood that the information processing system described in the embodiments of the present disclosure is to more clearly illustrate the technical solutions of the embodiments of the present disclosure and does not constitute a limitation on the technical solutions provided by the embodiments of the present disclosure. Those skilled in the art will appreciate that as system architectures evolve and new service scenarios emerge, the technical solutions provided by the embodiments of the present disclosure are equally applicable to similar technical problems.

The following embodiments of the present disclosure can be applied to the information processing system 100 shown in FIG. 1A, or parts thereof, but are not limited thereto. The various subjects shown in FIG. 1A are examples. The information processing system may include all or part of the subjects in FIG. 1A, and may also include other subjects not shown in FIG. 1A. The number and form of each subject are arbitrary. The connection relationships between the subjects are examples. The subjects may not be connected or may be connected. The connection may be in any manner, may be direct or indirect, and may be wired or wireless.

The embodiments of the present disclosure can be applied to Long Term Evolution (LTE), LTE-Advanced (LTE-A), LTE-Beyond (LTE-B), SUPER 3G, IMT-Advanced, a fourth generation mobile communication system (4G), a fifth generation mobile communication system (5G), 5G new radio (NR), Future Radio Access (FRA), New-Radio Access Technology (RAT), New Radio (NR), New radio access (NX), Future generation radio access (FX), Global System for Mobile communications (GSM (registered trademark)), CDMA2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), a Public Land Mobile Network (PLMN) network, a Device-to-Device (D2D) system, a Machine to Machine (M2M) system, an Internet of Things (IoT) system, Vehicle-to-Everything (V2X), systems using other communication methods, next-generation systems based on them, etc. Furthermore, multiple systems may be combined (e.g., a combination of LTE or LTE-A and 5G) for application.

In some embodiments, the continuous emergence of new Internet applications such as Augmented Reality (AR) or Virtual Reality (VR) imposes higher requirements on wireless communication technologies, driving the continuous evolution of wireless communication technologies to meet application demands. Currently, cellular mobile communication technology is in the evolution stage of a new generation of technology. An important characteristic of the new generation of technology is to support flexible configuration of multiple service types. Since different service types have different requirements for wireless communication technology, for example, the enhanced Mobile BroadBand (eMBB) service type mainly emphasizes requirements such as large bandwidth and high speed; the Ultra Reliable Low Latency Communication (URLLC) service type mainly emphasizes requirements such as high reliability and low latency; the massive Machine Type Communication (mMTC) service type mainly emphasizes requirements such as massive data. Therefore, the new generation wireless communication system requires flexible and configurable designs to support transmission of multiple service types.

In the research of wireless communication technology, satellite communication is considered an important aspect of future wireless communication technology development. Satellite communication refers to radio communication equipment on the ground using satellites as relays for communication. A satellite communication system consists of a satellite part and a ground part. The characteristics of satellite communication are: large communication range; as long as within the coverage of the satellite's radio waves, communication can be conducted between any two points; less susceptible to terrestrial disasters (high reliability). Satellite communication, as a supplement to current terrestrial cellular communication systems, can have the following benefits:
Extending coverage: For areas where current cellular communication systems cannot cover or have high coverage costs, such as oceans, deserts, remote mountainous areas, etc., satellite communication can solve communication problems.

Emergency communication: In extreme situations such as disasters like earthquakes where cellular communication infrastructure becomes unavailable, satellite communication can quickly establish communication connections.

Providing industry applications: For example, for latency-sensitive services requiring long-distance transmission, satellite communication can be used to reduce service transmission latency.

It is foreseeable that in future wireless communication systems, satellite communication systems and terrestrial cellular communication systems will gradually achieve deep integration, truly realizing the interconnection of all things. However, due to the high-speed movement of satellites, the reliability of data interaction in satellite communication scenarios cannot be effectively achieved.

In some embodiments, due to the large latency of satellite communication systems, for some IoT devices, HARQ stalling problems may occur. For example, as shown in FIG. 1B, a schematic diagram of a HARQ stalling problem for an NB-IoT terminal configured with HARQ processes is provided.

Optionally, to avoid HARQ stalling problems in Non-Terrestrial Network (NTN) scenarios and thereby reduce system performance, HARQ disabling or HARQ turning off operations may be introduced. That is, for a certain HARQ process, if HARQ disabling or HARQ turning off is configured, then the terminal does not feed back HARQ information for downlink (DL) transmissions of that HARQ process.

Optionally, HARQ information may include at least one of an Acknowledgement (ACK) and a Non-Acknowledgement (NACK).

Optionally, for IoT terminals, HARQ disabling based on semi-static configuration is currently supported, and overriding the HARQ disabling in the semi-static configuration via DCI is also supported, and directly indicating HARQ disabling via DCI is also supported.

Optionally, if a terminal is configured to support HARQ disabling based on semi-static configuration and also supports overriding the disabling in the semi-static configuration via DCI, and for a target HARQ process, RRC indicates an HARQ disabled state, and DCI indicates an HARQ enabled state, then the terminal does not need to wait for a Round-Trip Time (RTT) and a predetermined duration before performing a detection of scheduling for the target HARQ process. Optionally, the predetermined duration may be 2ms or 3ms or 4ms, etc.

In some embodiments, for satellite communication scenarios, due to the long signal transmission distance between the transmitter and receiver, data transmission has a certain arrival time. For transmissions with uplink-downlink relationships, it is determined that the terminal needs to compensate for the propagation delay based on the base station's configuration.

For example, as shown in FIG. 1C: the base station's (gNB) uplink transmission (gNB UL) and downlink transmission (gNB DL) timings are aligned, i.e., the frames labeled n in gNB UL and gNB DL in FIG. 1C are aligned; and as seen in FIG. 1C, there is a transmission delay between gNB UL and the UE's downlink transmission (UE DL); the uplink transmission timing advance (Time Advance, TA) of the UE needs to consider the transmission delay from the UE to the satellite, so that uplink transmissions from different UEs can reach the gNB within a predetermined time range.

For example, as shown in FIG. 1D: the gNB's uplink transmission and downlink transmission are not aligned, i.e., the frames labeled n in gNB UL and gNB DL in FIG. 1D are not aligned, and there is an offset in the time domain (gNB DL-UL frame timing shift); there is a transmission delay between the gNB's downlink transmission (gNB DL) and the UE's downlink transmission (UE DL); similarly, the uplink transmission timing advance (Time Advance, TA) of the UE needs to consider the transmission delay from the terminal to the satellite, so that uplink transmissions from different UEs can reach the gNB within a predetermined time range. In this embodiment, the timing offset between the gNB's uplink and downlink transmissions (gNB DL-UL frame timing shift) is considered when determining the timing advance.

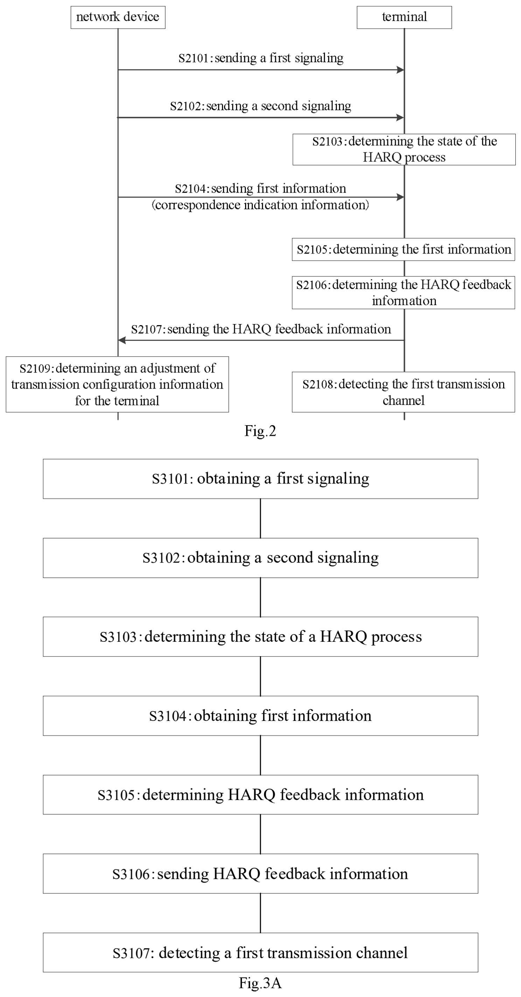

FIG. 2 is an interaction schematic diagram of a method for processing information according to an embodiment of the present disclosure. As shown in FIG. 2, an embodiment of the present disclosure relates to a method for processing information used in the information processing system 100, the method including:
Step S2101: a network device sending a first signaling to a terminal.

In some embodiments, the terminal receives the first signaling sent by the network device.

In some embodiments, the first signaling is for the terminal to determine that a HARQ process is in an HARQ disabled state, or the first signaling is for the terminal to determine that the state of the HARQ process is changed to an HARQ disabled state. For example, the first signaling carries first indication information, where the first indication information is used to indicate that the HARQ process is in an HARQ disabled state.

Optionally, the HARQ disabled state refers to a state where HARQ is disabled. HARQ disabling may also be HARQ turning off, HARQ deactivation, or making HARQ lose capability, etc.

Optionally, HARQ disabling means not feeding back HARQ feedback information. For example, the HARQ feedback information may include at least one of ACK and NACK. For another example, the HARQ feedback information may be the HARQ information in the previous embodiments.

Optionally, HARQ disabling includes one of: RRC-based HARQ disabling, DCI-based HARQ disabling, and simultaneously supporting RRC-based HARQ disabling and DCI-based HARQ disabling.

Optionally, the HARQ enabled state refers to a state where HARQ is enabled. HARQ enabling may also be HARQ turning on or enabling HARQ, etc.

Optionally, HARQ enabling means that HARQ feedback information needs to be provided.

In some embodiments, the name of the first signaling is not limited, and it may be, for example, RRC signaling, DCI, a MAC CE, or a first message, etc.

Optionally, the RRC signaling may be any an RRC signaling; for example, RRC resume signaling, RRC connection signaling, or RRC connection release signaling, etc.

Optionally, the DCI may be any DCI; for example, the second DCI may be DCI format 0, DCI format 1, DCI format 2, or DCI format X, etc., where X is an integer greater than 0.

Step S2102: the network device sending a second signaling to the terminal.

In some embodiments, the terminal receives the second signaling sent by the network device.

In some embodiments, the second signaling is used for the terminal to determine that a HARQ process is in an HARQ enabled state, or the second signaling is used for the terminal to determine that the state of the HARQ process is changed to an HARQ enabled state. For example, the second signaling carries second indication information; where the second indication information is used to indicate that the HARQ process is in an HARQ enabled state, or the second indication information is used to indicate that the HARQ process is changed from an HARQ disabled state to an HARQ enabled state.

In some embodiments, the name of the second signaling is not limited, and it may be, for example, RRC signaling, DCI, a MAC CE, or a second message, etc.

In some embodiments, the second signaling may be an RRC signaling.

Step S2103: the terminal determining the state of the HARQ process.

In some embodiments, the terminal determines that the HARQ process is in an HARQ disabled state based on the first signaling, and the terminal determines that the state of the HARQ process is changed to an HARQ enabled state based on the second signaling.

Step S2104: the network device sending first information to the terminal.

In some embodiments, the terminal receives the first information sent by the network device.

In some embodiments, the first information is used to indicate a correspondence between the HARQ feedback information and transmission configuration information.

In some embodiments, the first information is for the terminal to determine the HARQ feedback information.

In some embodiments, the name of the first information is not limited, and it may be, for example, feedback indication information, or correspondence indication information, etc.

Optionally, the HARQ feedback information may be at least one of ACK and NACK. For example, ACK is used to indicate that an adjustment of transmission configuration information is not needed; and/or NACK is used to indicate that an adjustment of transmission configuration information is needed.

Optionally, the HARQ feedback information may be at least one of third indication information and fourth indication information. For example, the third indication information is used to indicate acknowledgement of HARQ. For example, the fourth indication information is used to indicate non-acknowledgement of HARQ.

Optionally, the third indication information may be ACK; the fourth indication information may be NACK.

Optionally, the transmission configuration information includes at least one of: MCS, MCS level, transmission resource size, and transmission power. Optionally, the MCS level is used to describe the level corresponding to the MCS. For example, the MCS level may include at least two levels; e.g., the MCS level may include: a first MCS level and a second MCS level, where the first MCS level is higher than the second MCS level.

For example, different HARQ feedback information corresponds to different transmission configuration information.

For example, the MCS includes a first MCS and a second MCS; the first information is used to indicate the following correspondences: correspondence between HARQ feedback information being the third indication information and the first MCS; and/or correspondence between HARQ feedback information being the fourth indication information and the second MCS.

For another example, the transmission configuration information is maintaining the MCS level and reducing the MCS level; the first information is used to indicate the following correspondences: correspondence between HARQ feedback information being the third indication information and maintaining the MCS level; and/or correspondence between HARQ feedback information being the fourth indication information and reducing the MCS level.

In some embodiments, the name of the first information is not limited, for example, it may be correspondence information, etc.

In some embodiments, the network device sends RRC signaling to the terminal, where the RRC signaling includes the first information.

In some embodiments, the network device sends a MAC CE to the terminal, where the MAC CE includes the first information.

In some embodiments, the network device sends physical layer signaling to the terminal, where the physical layer signaling includes the first information. Optionally, the physical layer signaling may be DCI.

Step S2105: the terminal determining the first information.

In some embodiments, the terminal determines the first information based on a protocol agreement. Optionally, the protocol agreement may be a communication protocol agreement, or the protocol agreement may be an agreement between the network device and the terminal. Optionally, the communication protocol may be a wireless standard communication protocol.

Step S2106: the terminal determining the HARQ feedback information.

In some embodiments, the HARQ feedback information is used for the network device to determine whether to adjust transmission configuration information.

In some embodiments, the name of the HARQ feedback information is not limited, for example, it may be second information, or feedback indication information, etc.

In some embodiments, the terminal determines the HARQ feedback information based on a demodulation result of a PDSCH scheduled for a single time.

Optionally, the demodulation result includes one of a successfully decoded demodulation result and an unsuccessfully decoded demodulation result.

Optionally, the terminal determines the HARQ feedback information including an Acknowledgement (ACK) in a case where the PDSCH scheduled for a single time is successfully demodulated.

Optionally, the terminal determines the HARQ feedback information including a Non-Acknowledgement (NACK) in a case where the PDSCH scheduled for a single time is unsuccessfully demodulated.

In some embodiments, the terminal determines the HARQ feedback information based on demodulation results of the PDSCH scheduled for multiple times within a second time.

Optionally, the terminal determines the HARQ feedback information based on demodulation results of the PDSCH scheduled at least once within the second time.

Optionally, the terminal determines the HARQ feedback information including an ACK in a case where a probability of successfully demodulating the PDSCH scheduled for multiple times within the second time is greater than or equal to a threshold.

Optionally, the terminal determines the HARQ feedback information including a NACK in a case where a probability of successfully demodulating the PDSCH scheduled for multiple times within the second time is less than a threshold.

In some embodiments, the second time is agreed by a protocol, or the second time is configured by a network device. Optionally, the second time may be determined by a communication protocol. Optionally, the second time may be determined by an agreement between the network device and the terminal. Optionally, the terminal receives the second time sent by the network device.

In some embodiments, the second time may be any duration. For example, the second time may be 20ms or 50ms, etc.

In some embodiments, the second time may be at least one of: at least one subframe, at least one slot, and at least one symbol.

In some embodiments, the threshold value is predetermined by a protocol, or the threshold value may be configured by a network device. For example, the threshold value may be 70% or 80%, etc.

For example, the terminal schedules the PDSCH 6 times within the second time; the terminal determines the threshold value to be 80%. If the terminal determines that 4 out of the 6 scheduled PDSCHs are successfully decoded, the success probability is less than 80%; the terminal determines the HARQ feedback information including ACK. Alternatively, if the terminal determines that 5 out of the 6 scheduled PDSCHs are successfully decoded, the success probability is greater than 80%; the terminal determines the HARQ feedback information including NACK.

In some embodiments, the terminal determines HARQ feedback information for the HARQ process. Optionally, the HARQ process may be any HARQ process. Optionally, the HARQ process is a target HARQ process.

Step S2107: the terminal sending the HARQ feedback information to the network device.

In some embodiments, the network device receives the HARQ feedback information sent by the terminal.

In some embodiments, the HARQ feedback information is feedback information for the HARQ process.

Step S2108: the terminal detecting the first transmission channel.

In some embodiments, the network device sends data in the first transmission channel. Optionally, the data includes at least one of control signaling and control information.

Optionally, the network device may send data in the first transmission channel after receiving the HARQ feedback information.

Optionally, the network device may send data in the first transmission channel before receiving the HARQ feedback information.

In some embodiments, the terminal detects the first transmission channel after sending the HARQ feedback information.

Optionally, the terminal detects the first transmission channel after an end time of sending the HARQ feedback information.

For example, if the end time of the terminal sending the HARQ feedback information is in subframe n, the terminal can perform a detection of the first transmission channel after subframe n.

Optionally, the terminal detects the first transmission channel after a first time following an end time of sending the HARQ feedback information.

In some embodiments, the first time is agreed by a protocol, or the first time is configured by a network device.

In some embodiments, the first time includes at least one of: a first duration, at least one subframe, at least one slot, and at least one symbol. Optionally, the first duration may be any duration; for example, it may be 2ms or 3ms, etc.

For example, if the end time of the terminal sending the HARQ feedback information is in subframe n; if the first time is 1 subframe, the terminal can perform a detection of the first transmission channel in subframe n+1; or, if the first time is 3ms, the terminal can perform a detection of the first transmission channel at the 3ms after subframe n.

For example, if the end time of the terminal sending the HARQ feedback information is in the 3rd slot of subframe n; if the first time is 3 slots, the terminal can perform a detection of the first transmission channel after the 3rd slot of subframe n.

For example, if the end time of the terminal sending the HARQ feedback information is at the 1st symbol of the 3rd slot of subframe n; if the first time is 2 symbols, the terminal can perform a detection of the first transmission channel after the 3rd symbol of the 3rd slot of subframe n.

In some embodiments, the first transmission channel may be any transmission channel. Optionally, the first transmission channel is a PDCCH.

Step S2109: the network device determining an adjustment of transmission configuration information for the terminal.

In some embodiments, the network device determines an adjustment of transmission configuration information for the terminal based on the HARQ feedback information. Optionally, if the network device determines that the HARQ feedback information is ACK, it determines not to adjust the transmission configuration information; or, if the network device determines that the HARQ feedback information is NACK, it determines to adjust the transmission configuration information.

In some embodiments, the network device may also ignore the HARQ feedback information reported by the terminal and determine to adjust or not adjust the transmission configuration information for the terminal. Optionally, the adjusted transmission configuration information may be used by the network device to send data in the first transmission channel.

In some embodiments, the adjusted transmission configuration information is used by the network device to send data in the first transmission channel.

In some embodiments, "obtain", "acquire", "get", "receive", "transmit", "send and/or receive" can be used interchangeably, which can be interpreted as receiving from another subject, obtaining from a protocol, deriving from its own processing, self-implementation, and other meanings.

In some embodiments, "send", "transmit", "report", "deliver", "transmit", "bidirectional transmission", "send and/or receive", and other terms can be used interchangeably.

In some embodiments, terms such as "certain", "preset", "predefined", "configured", "indicated", "a certain", "any", "first", etc. can be used interchangeably. "Certain A", "preset A", "predefined A", "configured A", "indicated A", "a certain A", "any A", "first A" can be interpreted as A predefined in a protocol, etc., or can be interpreted as A obtained through setting, configuration, or indication, or can be interpreted as certain A, a certain A, any A, or first A, etc., but is not limited thereto.

In some embodiments, determination or judgment can be made through a value represented by 1 bit (0 or 1), or through a Boolean value represented by true or false, or through comparison of numerical values (e.g., comparison with a predetermined value), but is not limited thereto.

In some embodiments, "not expecting to receive" can be interpreted as not receiving on time-domain resources and/or frequency-domain resources, or can be interpreted as not performing subsequent processing on the data, etc. after receiving it; "not expecting to send" can be interpreted as not sending, or can be interpreted as sending but not expecting the receiver to respond to the sent content.

The information processing method involved in the embodiments of the present disclosure may include at least one of steps S2101 to S2109. For example, step S2108 can be implemented as an independent embodiment; the combination of steps S2107 and S2108 can be an independent embodiment; the combination of steps S2103, S2107, and S2108 can be an independent embodiment; the combination of steps S2104, S2107, and S2108 can be an independent embodiment; the combination of steps S2105, S2107, and S2108 can be an independent embodiment; the combination of steps S2106, S2107, and S2108 can be an independent embodiment; the combination of steps S2101, S2102, S2103, S2107, and S2108 can be an independent embodiment; the combination of steps S2101 to S2108 can be an independent embodiment; the combination of steps S2101 to S2109 can be an independent embodiment.

In some embodiments, step S2104 and steps S2101, S2102 may be exchanged in order or performed simultaneously; step S2105 and steps S2101, S2102 may be exchanged in order or performed simultaneously; step S2109 and step S2108 may be exchanged in order.

In some embodiments, steps S2101, S2102, S2104 to S2106, and S2109 may be optional. In different embodiments, one or more of these steps may be omitted or substituted.

In some embodiments, steps S2101 to S2103, S2105, S2108, and S2109 may be optional. In different embodiments, one or more of these steps may be omitted or substituted.

In some embodiments, steps S2101 to S2104, S2106, S2108, and S2109 may be optional. In different embodiments, one or more of these steps may be omitted or substituted.

In some embodiments, reference may be made to other optional implementations described before or after the description corresponding to FIG. 2.

FIG. 3A is a flowchart of a method for processing information according to an embodiment of the present disclosure. As shown in FIG. 3A, an embodiment of the present disclosure relates to a method for processing information performed by a terminal, the method including:
Step S3101: obtaining a first signaling.

For embodiments of step S3101 reference may be made to the optional implementations of step S2101 in FIG. 2 and other related parts in the embodiments associated with FIG. 2, which will not be repeated here.

In some embodiments, the terminal receives the first signaling sent by a network device, but is not limited thereto, and may also receive the first signaling sent by other subjects.

In some embodiments, the terminal obtains the first signaling specified by a protocol.

In some embodiments, the terminal obtains the first signaling from an upper layer(s).

In some embodiments, the terminal performs processing to obtain the first signaling.

In some embodiments, step S3101 is omitted, and the terminal autonomously implements the function indicated by the first signaling, or the above function is default or preconfigured.

Optionally, the first signaling is RRC signaling.

Step S3102: obtaining a second signaling.

For embodiments of step S3102 reference may be made to the optional implementations of step S2102 in FIG. 2 and other related parts in the embodiments associated with FIG. 2, which will not be repeated here.

In some embodiments, the terminal receives the second signaling sent by a network device, but is not limited thereto, and may also receive the second signaling sent by other subjects.

In some embodiments, the terminal obtains the second signaling specified by a protocol.

In some embodiments, the terminal obtains the second signaling from an upper layer(s).

In some embodiments, the terminal performs processing to obtain the second signaling.

In some embodiments, step S3102 is omitted, and the terminal autonomously implements the function indicated by the second signaling, or the above function is default or preconfigured.

Optionally, the second signaling is DCI.

Step S3103: determining the state of a HARQ process.

For embodiments of step S3103 reference may be made to the optional implementations of step S2103 in FIG. 2 and other related parts in the embodiments associated with FIG. 2, which will not be repeated here.

In some embodiments, after determining that the HARQ process is in an HARQ disabled state, the terminal determines that the state of the HARQ process is changed to an HARQ enabled state. Optionally, the HARQ disabled state of the HARQ process is determined based on the first signaling; the HARQ enabled state of the HARQ process is determined based on the second signaling.

Step S3104: obtaining first information.

For embodiments of step S3104 reference may be made to the optional implementations of steps S2104 and S2105 in FIG. 2 and other related parts in the embodiments associated with FIG. 2, which will not be repeated here.

In some embodiments, the terminal receives the first information sent by a network device, but is not limited thereto, and may also receive the first information sent by other subjects.

In some embodiments, the terminal obtains the first information specified by a protocol.

In some embodiments, the terminal obtains the first information from an upper layer.

In some embodiments, the terminal performs processing to obtain the first information.

In some embodiments, step S3104 is omitted, and the terminal autonomously implements the function indicated by the first information, or the above function is default or preconfigured.

Optionally, the terminal determines the first information based on a protocol agreement.

Optionally, the first information is used to indicate a correspondence between the HARQ feedback information and transmission configuration information.

Optionally, the HARQ feedback information may be determined based on the first information.

Step S3105: determining HARQ feedback information.

For embodiments of step S3105 reference may be made to the optional implementations of step S2106 in FIG. 2 and other related parts in the embodiments associated with FIG. 2, which will not be repeated here.

Step S3106: sending HARQ feedback information.

For embodiments of step S3106 reference may be made to the optional implementations of step S2107 in FIG. 2 and other related parts in the embodiments associated with FIG. 2, which will not be repeated here.

In some embodiments, the terminal sends the HARQ feedback information to a network device, but is not limited thereto, and may also send the HARQ feedback information to other subjects.

Step S3107: detecting a first transmission channel.

For embodiments of step S3107 reference may be made to the optional implementations of step S2108 in FIG. 2 and other related parts in the embodiments associated with FIG. 2, which will not be repeated here.

Optionally, the terminal detects the first transmission channel after sending the HARQ feedback information.

The information processing method involved in the embodiments of the present disclosure may include at least one of steps S3101 to S3107. For example, step S3107 can be implemented as an independent embodiment; the combination of steps S3106 and S3107 can be an independent embodiment; the combination of steps S3103, S3106, and S3107 can be an independent embodiment; the combination of steps S3104, S3106, and S3107 can be an independent embodiment; the combination of steps S3105 and S3106 and S3107 can be an independent embodiment; the combination of steps S3101, S3102, S3103, S3106, and S3107 can be an independent embodiment; the combination of steps S3101 to S3107 can be an independent embodiment.

In some embodiments, step S3104 and steps S3101, S3102 may be exchanged in order or performed simultaneously.

In some embodiments, steps S3101, S3102, S3104 to S3106 may be optional. In different embodiments, one or more of these steps may be omitted or substituted.

In some embodiments, steps S3101 to S3104, S3106 may be optional. In different embodiments, one or more of these steps may be omitted or substituted.

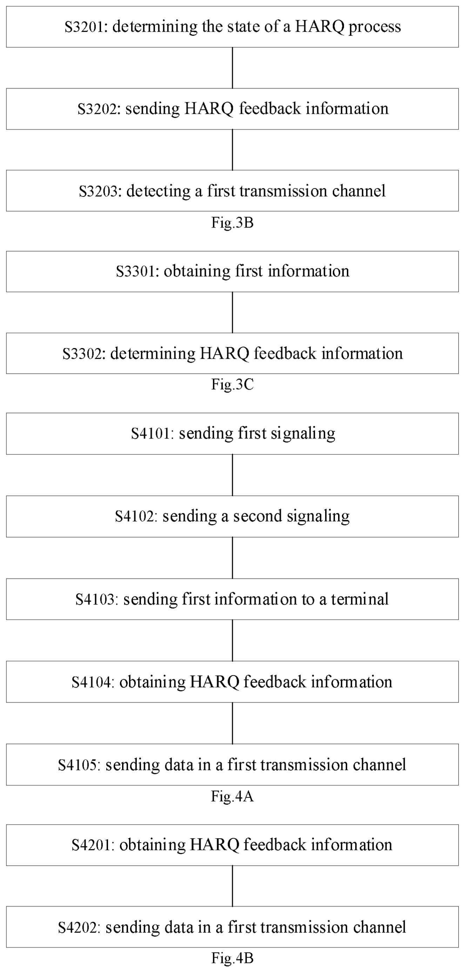

FIG. 3B is a flowchart of a method for processing information according to an embodiment of the present disclosure. As shown in FIG. 3B, an embodiment of the present disclosure relates to a method for processing information performed by a terminal, the method including:
Step S3201: determining the state of a HARQ process.

For embodiments of step S3201 reference may be made to the optional implementations of step S2103 in FIG. 2 or step S3103 in FIG. 3A, and other related parts in the embodiments associated with FIG. 2 and FIG. 3A, which will not be repeated here.

Step S3202: sending HARQ feedback information.

For embodiments of step S3202 reference may be made to the optional implementations of step S2107 in FIG. 2 or step S3106 in FIG. 3A, and other related parts in the embodiments associated with FIG. 2 and FIG. 3A, which will not be repeated here.

Step S3203: detecting a first transmission channel.

For embodiments of step S3203 reference may be made to the optional implementations of step S2108 in FIG. 2 or step S3107 in FIG. 3A, and other related parts in the embodiments associated with FIG. 2 and FIG. 3A, which will not be repeated here.

In some embodiments, determining the state of the HARQ process includes: after receiving first signaling and determining that the HARQ process is in an HARQ disabled state, determining, based on received second signaling, that the state of the HARQ process is changed to an HARQ enabled state.

In some embodiments, sending the HARQ feedback information includes: sending feedback information for the HARQ process.

In some embodiments, detecting the first transmission channel includes: detecting the first transmission channel after sending the HARQ feedback information.

In some embodiments, the first transmission channel is a Physical Downlink Control Channel (PDCCH).

In some embodiments, the first signaling is RRC signaling, and the second signaling is DCI.

In the above embodiment, the method further includes: after receiving the first signaling sent by a network device, receiving the second signaling sent by the network device.

In some embodiments, detecting the first transmission channel after sending the HARQ feedback information includes one of:
detecting the first transmission channel after an end time of sending the HARQ feedback information; or
detecting the first transmission channel after a first time following an end time of sending the HARQ feedback information.

In some embodiments, the first time is agreed by a protocol, or the first time is configured by a network device.

In some embodiments, the first time includes at least one of: a first duration; at least one subframe; at least one slot; and at least one symbol.

In some embodiments, the method includes one of:
determining the HARQ feedback information based on a demodulation result of a PDSCH scheduled for a single time; or
determining the HARQ feedback information based on demodulation results of the PDSCH scheduled for multiple times within a second time.

In some embodiments, determining the HARQ feedback information based on the demodulation result of the PDSCH scheduled for a single time includes one of:
determining the HARQ feedback information including an ACK in a case where the PDSCH scheduled for a single time is successfully demodulated; or
determining the HARQ feedback information including a NACK in a case where the PDSCH scheduled for a single time is unsuccessfully demodulated.

In some embodiments, determining the HARQ feedback information based on the demodulation results of the PDSCH scheduled for multiple times within the second time includes:
determining the HARQ feedback information including an ACK in a case where a probability of successfully demodulating the PDSCH scheduled for multiple times within the second time is greater than or equal to a threshold; or
determining the HARQ feedback information including a NACK in a case where a probability of successfully demodulating the PDSCH scheduled for multiple times within the second time is less than a threshold.

In some embodiments, the second time is agreed by a protocol, or the second time is configured by a network device.

In some embodiments, the HARQ feedback information is used for a network device to determine whether to adjust transmission configuration information; the transmission configuration information includes at least one of: MCS, transmission resource size, and transmission power.

In some embodiments, the method further includes one of:
determining first information based on a protocol agreement; where the first information is used to indicate a correspondence between the HARQ feedback information and transmission configuration information; or
receiving first information.

In some embodiments, receiving the first information includes one of:
receiving a RRC signaling, where the RRC signaling includes the first information;
receiving a MAC CE, where the MAC CE includes the first information; or
receiving a physical layer signaling, where the physical layer signaling includes the first information.

The above embodiments can be implemented individually or in combination. For embodiments reference may be made to the optional implementations of the steps in FIG. 2 and FIG. 3A, and will not be repeated here.

FIG. 3C is a flowchart of a method for processing information according to an embodiment of the present disclosure. As shown in FIG. 3C, an embodiment of the present disclosure relates to a method for processing information performed by a terminal, the method including:
Step S3301: obtaining first information.

For embodiments of step S3301 reference may be made to the optional implementations of step S2104 in FIG. 2 or step S3104 in FIG. 3A, and other related parts in the embodiments associated with FIG. 2 and FIG. 3A, which will not be repeated here.

Step S3302: determining HARQ feedback information.

For embodiments of step S3302 reference may be made to the optional implementations of step S2106 in FIG. 2 or step S3105 in FIG. 3A, and other related parts in the embodiments associated with FIG. 2 and FIG. 3A, which will not be repeated here.

In some embodiments, the terminal determines the HARQ feedback information based on the first information and a demodulation result of a PDSCH scheduled for a single time.

In some embodiments, the terminal determines the HARQ feedback information based on the first information and demodulation results of the PDSCH scheduled for multiple times within a second time.

The above embodiments can be implemented individually or in combination. For embodiments reference may be made to the optional implementations of the steps in FIG. 2 and FIG. 3A, and will not be repeated here.

FIG. 4A is a flowchart of a method for processing information according to an embodiment of the present disclosure. As shown in FIG. 4A, an embodiment of the present disclosure relates to a method for processing information performed by a network device, the method including:
Step S4101: sending first signaling.

For embodiments of step S4101 reference may be made to the optional implementations of step S2101 in FIG. 2 and other related parts in the embodiments associated with FIG. 2, which will not be repeated here.

In some embodiments, the network device sends the first signaling to a terminal, but is not limited thereto, and may also send the first signaling to other subjects.

In some embodiments, the first signaling is used for a terminal to determine that a HARQ process is in an HARQ disabled state.

Step S4102: sending a second signaling.

For embodiments of step S4102 reference may be made to the optional implementations of step S2102 in FIG. 2 and other related parts in the embodiments associated with FIG. 2, which will not be repeated here.

In some embodiments, the network device sends the second signaling to a terminal, but is not limited thereto, and may also send the second signaling to other subjects.

In some embodiments, the second signaling is for a terminal to determine that a HARQ process is in an HARQ enabled state or to determine that the state of the HARQ process is changed to an HARQ enabled state.

Step S4103: sending first information to a terminal.

For embodiments of step S4103 reference may be made to the optional implementations of step S2104 in FIG. 2 and other related parts in the embodiments associated with FIG. 2, which will not be repeated here.

In some embodiments, the network device sends the first information to a terminal, but is not limited thereto, and may also send the first information to other subjects.

In some embodiments, the first information is for a terminal to determine HARQ feedback information.

Step S4104: obtaining HARQ feedback information.

For embodiments of step S4104 reference may be made to the optional implementations of step S2107 in FIG. 2 and other related parts in the embodiments associated with FIG. 2, which will not be repeated here.

In some embodiments, the network device receives the HARQ feedback information sent by a terminal, but is not limited thereto, and may also receive the HARQ feedback information sent by other subjects.

In some embodiments, the network device obtains the HARQ feedback information specified by a protocol.

In some embodiments, the network device obtains the HARQ feedback information from an upper layer.

In some embodiments, the network device performs processing to obtain the HARQ feedback information.

In some embodiments, step S4104 is omitted, and the network device autonomously implements the function indicated by the HARQ feedback information, or the above function is default or preconfigured.

Step S4105: sending data in a first transmission channel.

For embodiments of step S4105 reference may be made to the optional implementations of step S2108 in FIG. 2 and other related parts in the embodiments associated with FIG. 2, which will not be repeated here.

In some embodiments, the network device sends data to a terminal, but is not limited thereto, and may also send data to other subjects.

Optionally, the data may be any data packet or information, etc.

The information processing method involved in the embodiments of the present disclosure may include at least one of steps S4101 to S4105. For example, steps S4104 and S4105 can be implemented as an independent embodiment; the combination of steps S4103, S4104, and S4105 can be an independent embodiment; the combination of steps S4101, S4102, S4104, and S4105 can be an independent embodiment; the combination of steps S4101 to S4105 can be an independent embodiment.

In some embodiments, step S4103 and steps S4101, S4102 may be exchanged in order or performed simultaneously; step S4104 and steps S4101, S4102 may be exchanged in order or performed simultaneously.

In some embodiments, steps S4101, S4102, and S4103 may be optional. In different embodiments, one or more of these steps may be omitted or substituted.

In some embodiments, steps S4101 and S4102 may be optional. In different embodiments, one or more of these steps may be omitted or substituted.

In some embodiments, reference may be made to other optional implementations described before or after the description corresponding to FIG. 2.

FIG. 4B is a flowchart of a method for processing information according to an embodiment of the present disclosure. As shown in FIG. 4B, an embodiment of the present disclosure relates to a method for processing information performed by a network device, the method including:
Step S4201: obtaining HARQ feedback information.

For embodiments of step S4201 reference may be made to the optional implementations of step S2107 in FIG. 2 or step S4104 in FIG. 4A, and other related parts in the embodiments associated with FIG. 2 and FIG. 4A, which will not be repeated here.

Step S4202: sending data in a first transmission channel.

For embodiments of step S4202 reference may be made to the optional implementations of step S2108 in FIG. 2 or step S4105 in FIG. 4A, and other related parts in the embodiments associated with FIG. 2 and FIG. 4A, which will not be repeated here.

In some embodiments, steps S4201 and S4202 may be exchanged in order or performed simultaneously.

Optionally, the method includes: a network device sending a second signaling after sending first signaling; where the first signaling is for a terminal to determine that a HARQ process is in an HARQ disabled state, and the second signaling is used for the terminal to determine that a state of the HARQ process is changed to an HARQ enabled state.

Optionally, obtaining the HARQ feedback information includes: receiving HARQ feedback information for the HARQ process.

In some embodiments, the first transmission channel is a PDCCH.

In some embodiments, the first signaling is Radio Resource Control (RRC) signaling, and the second signaling is Downlink Control Information (DCI).

In some embodiments, the method further includes: determining an adjustment of transmission configuration information for the terminal based on the HARQ feedback information.

In some embodiments, sending data in the first transmission channel includes: sending data in the first transmission channel based on the adjusted transmission configuration information.

In some embodiments, the HARQ feedback information includes one of:
an Acknowledgement (ACK), used to indicate that an adjustment of transmission configuration information is not needed; or
a Non-Acknowledgement (NACK), used to indicate that an adjustment of transmission configuration information is needed.

In some embodiments, the method further includes: sending first information, where the first information is used to indicate a correspondence between the HARQ feedback information and transmission configuration information.

In some embodiments, sending the first information includes one of:
sending a RRC signaling, where the RRC signaling includes the first information;
sending a MAC CE, where the MAC CE includes the first information; or
sending a physical layer signaling, where the physical layer signaling includes the first information.

The above embodiments can be implemented individually or in combination. For embodiments reference may be made to the optional implementations of the steps in FIG. 2 and FIG. 4A, and will not be repeated here.

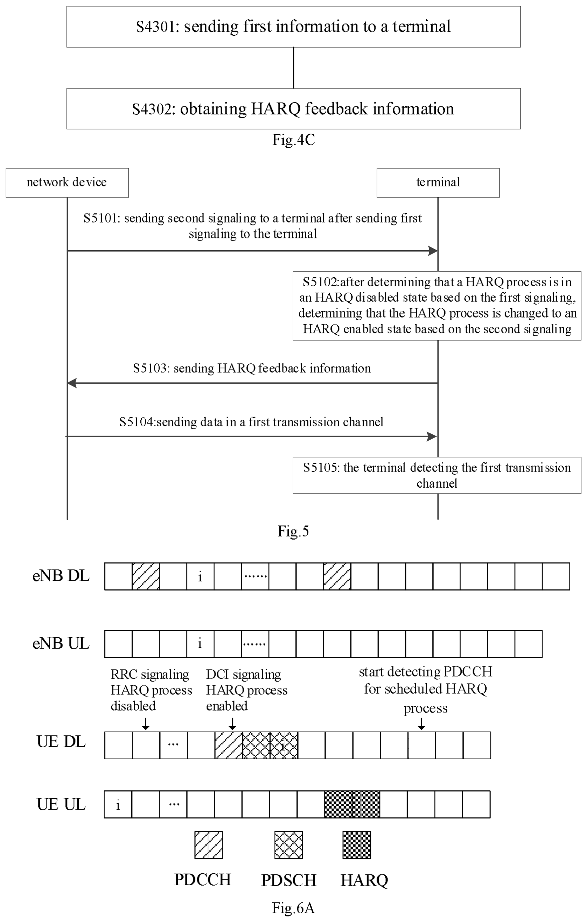

FIG. 4C is a flowchart of a method for processing information according to an embodiment of the present disclosure. As shown in FIG. 4C, an embodiment of the present disclosure relates to a method for processing information performed by a network device, the method including:
Step S4301: sending first information to a terminal.

For embodiments of step S4301 reference may be made to the optional implementations of step S2104 in FIG. 2 or step S4103 in FIG. 4A, and other related parts in the embodiments associated with FIG. 2 and FIG. 4A, which will not be repeated here.

Step S4302: obtaining HARQ feedback information.

For embodiments of step S4302 reference may be made to the optional implementations of step S2107 in FIG. 2 or step S4104 in FIG. 4A, and other related parts in the embodiments associated with FIG. 2 and FIG. 4A, which will not be repeated here.

The above embodiments can be implemented individually or in combination. For embodiments reference may be made to the optional implementations of the steps in FIG. 2 and FIG. 4A, and will not be repeated here.

FIG. 5 is a flowchart of a method for processing information according to an embodiment of the present disclosure. As shown in FIG. 5, an embodiment of the present disclosure relates to a method for processing information used in a communication system, the method including:
Step S5101: a network device sending second signaling to a terminal after sending first signaling to the terminal.

For embodiments of step S5101 reference may be made to the optional implementations of steps S2101 and S2102 in FIG. 2, steps S3101 and S3102 in FIG. 3A, steps S4101 and S4102 in FIG. 4A, and other related parts in the embodiments associated with FIG. 2, FIG. 3A, and FIG. 4A, which will not be repeated here.

Step S5102, after determining that a HARQ process is in an HARQ disabled state based on the first signaling, a terminal determining that the HARQ process is changed to an HARQ enabled state based on the second signaling.

For embodiments of step S5102 reference may be made to the optional implementations of step S2103 in FIG. 2, step S3103 in FIG. 3A, and other related parts in the embodiments associated with FIG. 2 and FIG. 3A, which will not be repeated here.

Step S5103: the terminal sending HARQ feedback information to the network device.

For embodiments of step S5103 reference may be made to the optional implementations of step S2107 in FIG. 2, step S3106 in FIG. 3A, step S4104 in FIG. 4A, and other related parts in the embodiments associated with FIG. 2, FIG. 3A, and FIG. 4A, which will not be repeated here.

Step S5104: the network device sending data to the terminal on a first transmission channel.

For embodiments of step S5104 reference may be made to the optional implementations of step S2108 in FIG. 2, step S4105 in FIG. 4A, and other related parts in the embodiments associated with FIG. 2 and FIG. 4A, which will not be repeated here.

Step S5105: the terminal detecting the first transmission channel.

For embodiments of step S5105 reference may be made to the optional implementations of step S2108 in FIG. 2, step S3107 in FIG. 3A, and other related parts in the embodiments associated with FIG. 2 and FIG. 3A, which will not be repeated here.

In some embodiments, the above method may include the methods described in the embodiments related to the information processing system 100 side, the terminal side, the network device side, etc., which will not be repeated here.

An embodiment of the present disclosure relates to a method for processing information, the method including:

Step S6101: a terminal determining, based on received configuration information, that the terminal simultaneously supports RRC-based HARQ disabling or supports DCI-based HARQ disabling.

Step S6102: the terminal determining that for a target HARQ process, the HARQ state indicated by the RRC configuration indicates that the HARQ process is in an HARQ disabled state; the terminal receives DCI and determines that the state of the target HARQ process is changed to an HARQ enabled state.

Step S6103: the terminal reporting HARQ feedback information for PDSCH transmissions on the target HARQ process, and starts performing a detection of PDCCH scheduling for the target HARQ process after an interval of X time from the transmission unit where the end position of sending the HARQ feedback information is located. The value of X can be predefined or preconfigured to the terminal. The unit of X can be a logical time unit (such as slot, subframe, etc.) or an absolute time unit (such as ms).

Optionally, the end position of sending the HARQ feedback information is the end time of sending the HARQ feedback information in the previous embodiments; X is the first time in the previous embodiments.

For example, as shown in FIG. 6A, for an NB-IoT terminal, if the end position of the terminal sending the HARQ feedback is subframe n, then the terminal can start performing a detection of PDCCH for the target HARQ process after subframe n+1 (X=1).

For example, for an eMTC terminal, if the end position of the terminal sending the HARQ feedback is subframe n, then the terminal can start performing a detection of PDCCH for the target HARQ process after subframe n.

Step S6104: the terminal reporting HARQ information, where the HARQ information is determined based on whether downlink data is successfully decoded or not. The HARQ information is used to indicate the terminal's adjustment situation regarding transmission configuration. The terminal can determine the correspondence between indication information and transmission configuration adjustment based on a predefined method or by receiving indication information determined by the base station through RRC signaling, MAC CE, or physical layer signaling.

Optionally, the base station may be the network device in the previous embodiments; the HARQ information may be the HARQ feedback information in the previous embodiments; the indication information may be the third indication information or the fourth indication information in the previous embodiments for the terminal.

For example, the transmission configuration may be MCS, and the correspondence may be as shown in Table 1 below:

**Table 1**

| Indication Information | Transmission Configuration |
|---|---|
| 0 | Maintain MCS |
| 1 | Reduce MCS level |

For example, of course, the transmission configuration can also be other transmission-related configuration information, such as resource size, power, etc., or a combination of multiple transmission configuration information. This will not be repeated here.

Optionally, the terminal determines the content of the HARQ information. The determination of the HARQ information content can be based on the demodulation result of a PDSCH scheduled for a single time, or based on the demodulation situation of PDSCHs within a target time period.

For example, the terminal determines the HARQ information based on the demodulation result of a PDSCH scheduled for a single time. For example, the terminal can determine the HARQ information based on the demodulation result of the PDSCH scheduled this time by DCI. When the PDSCH scheduled this time is successfully decoded, the terminal feeds back "ACK"; when the PDSCH scheduled this time is not successfully decoded, the terminal feeds back "NACK".

For example, the terminal determines the HARQ information based on the demodulation situation of PDSCHs within a target time period. The target time period can be determined based on a predefined or preconfigured method. If the terminal determines that the success probability of multiple PDSCH transmissions within the target time period is greater than a predefined threshold, then regardless of the success or failure of the PDSCH scheduled this time, the terminal feeds back "ACK"; or if the terminal determines that the success probability of multiple PDSCH transmissions within the target time period is less than a predefined threshold, then regardless of the success or failure of the PDSCH scheduled this time, the terminal feeds back "NACK".

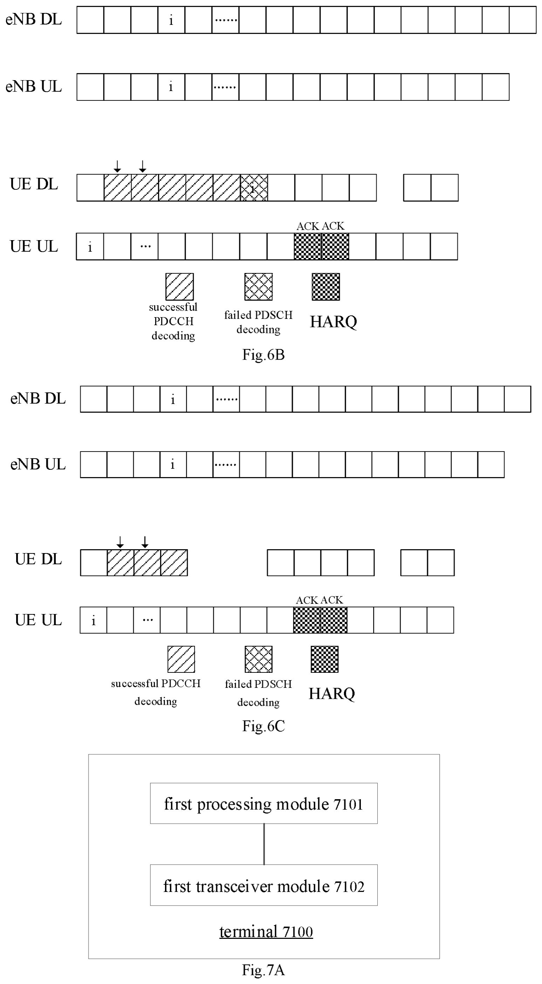

As shown in FIG. 6B: assuming that the predefined time window contains 6 PDSCH transmissions, and the predefined threshold is 80%. Although the PDSCH transmission scheduled by the DCI indicating HARQ enabled fails, because the success probability of PDSCH transmissions within the predefined time period is greater than the predefined threshold, the terminal still feeds back "ACK" information. Optionally, the predefined time window is the second time in the previous embodiments.

As shown in FIG. 6C: assuming that the predefined time window contains 6 PDSCH transmissions, and the predefined threshold is 80%. Although the PDSCH transmission scheduled by the DCI indicating HARQ enabled is successful, because the success probability of PDSCH transmissions within the predefined time period is less than the predefined threshold, the terminal still feeds back "NACK" information.

Step S6105: after receiving the HARQ indication information, the base station determining the transmission configuration adjustment for the target terminal and scheduling data based on the adjusted transmission configuration. Optionally, the HARQ indication information may be the HARQ feedback information in the previous embodiments.

The information processing method involved in the embodiments of the present disclosure may include at least one of steps S6101 to S6105. For example, step S6104 can be implemented as an independent embodiment; the combination of steps S6103 and S6104 can be an independent embodiment; the combination of steps S6102, S6103, and S6104 can be an independent embodiment; the combination of steps S6102 to S6105 can be an independent embodiment; the combination of steps S6101 to S6105 can be an independent embodiment.

In some embodiments, steps S6101, S6102, S6103, and S6105 may be optional. In different embodiments, one or more of these steps may be omitted or substituted.

In some embodiments, steps S6101, S6102, S6104, and S6105 may be optional. In different embodiments, one or more of these steps may be omitted or substituted.

In the embodiments of the present disclosure, some or all steps and their optional implementations may be combined with some or all steps of other embodiments, and may also be combined with optional implementations of other embodiments.

The embodiments of the present disclosure also propose an apparatus for implementing any of the above methods. For example, an apparatus is proposed, the apparatus includes units or modules for implementing each step executed by the terminal in any of the above methods. For another example, another apparatus is proposed, including units or modules for implementing each step executed by a network device (e.g., an access network device, a core network function node, a core network device, etc.) in any of the above methods.

It should be understood that the division of units in the above apparatus is only a division of logical functions, and in actual implementation, they may be fully or partially integrated into one physical entity, or may be physically separated. In addition, the units in the apparatus may be implemented in the form of software invoked by a processor: for example, the apparatus includes a processor, the processor is connected to a memory, computer instructions are stored in the memory, and the processor invokes the computer instructions stored in the memory to implement any of the above methods or the functions of the units of the above apparatus, where the processor is, for example, a general-purpose processor, such as a Central Processing Unit (CPU) or a microprocessor, and the memory is a memory inside the apparatus or a memory outside the apparatus. Alternatively, the units in the apparatus may be implemented in the form of hardware circuits. The functions of some or all units may be implemented through the design of the hardware circuit. The above hardware circuit can be understood as one or more processors. For example, in one implementation, the above hardware circuit is an Application-Specific Integrated Circuit (ASIC), and the functions of some or all units are implemented by designing the logical relationships between circuit elements. For another example, in another implementation, the above hardware circuit can be implemented by a Programmable Logic Device (PLD). Taking a Field Programmable Gate Array (FPGA) as an example, it may include a large number of logic gate circuits, and the connection relationships between the logic gate circuits are configured through configuration files, thereby implementing the functions of some or all units. All units of the above apparatus may be fully implemented in the form of software invoked by a processor, or fully implemented in the form of a hardware circuit, or partially implemented in the form of software invoked by a processor and the remaining part implemented in the form of a hardware circuit.

In the embodiments of the present disclosure, a processor is a circuit with signal processing capability. In one implementation, the processor may be a circuit with instruction reading and execution capability, such as a Central Processing Unit (CPU), a microprocessor, a Graphics Processing Unit (GPU) (which can be understood as a microprocessor), or a Digital Signal Processor (DSP), etc. In another implementation, the processor may implement certain functions through the logical relationships of hardware circuits. The logical relationships of the hardware circuits are fixed or reconfigurable. For example, the processor is a hardware circuit implemented by an Application-Specific Integrated Circuit (ASIC) or a Programmable Logic Device (PLD), such as an FPGA. In a reconfigurable hardware circuit, the process of the processor loading configuration files to implement hardware circuit configuration can be understood as the processor loading instructions to implement the functions of some or all units. Additionally, it may be a hardware circuit designed for artificial intelligence, which can be understood as an ASIC, such as a Neural Network Processing Unit (NPU), a Tensor Processing Unit (TPU), a Deep learning Processing Unit (DPU), etc.

FIG. 7A is a schematic structural diagram of a terminal provided by an embodiment of the present disclosure. As shown in FIG. 7A, the terminal 7100 includes: at least one of a first processing module 7101 and a first transceiver module 7102. In some embodiments, the first processing module 7101 is configured to, after determining that a HARQ process is in an HARQ disabled state, determine that the state of the HARQ process is changed to an HARQ enabled state; and the first transceiver module 7102 is configured to send HARQ feedback information and detect a first transmission channel after sending the HARQ feedback information. Optionally, the first processing module 7101 is configured to perform at least one of the processing steps, etc. (e.g., steps S2103, S2105, S2106, and/or S2108, etc., but not limited thereto) executed by the terminal in any of the above methods, which will not be repeated here. Optionally, the first transceiver module 7102 is configured to perform at least one of the sending and/or receiving steps, etc. (e.g., steps S2101, S2102, S2104, and/or S2107, etc., but not limited thereto) executed by the terminal in any of the above methods, which will not be repeated here.

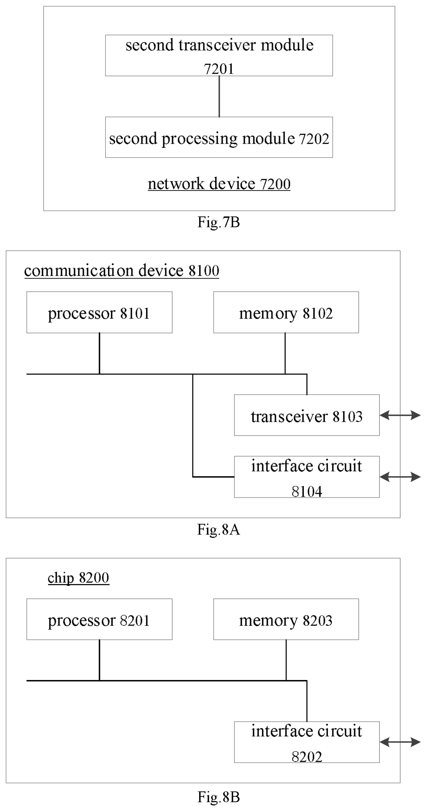

FIG. 7B is a schematic structural diagram of a network device provided by an embodiment of the present disclosure. As shown in FIG. 7B, the network device 7200 includes: at least one of a second transceiver module 7201 and a second processing module 7202. In some embodiments, the second transceiver module 7201 is configured to send second signaling after sending first signaling, and send data in a first transmission channel. Optionally, the second transceiver module 7201 is configured to perform at least one of the sending and/or receiving steps, etc. (e.g., steps S2101, S2102, S2104, and/or S2107, etc., but not limited thereto) executed by the terminal in any of the above methods, which will not be repeated here. Optionally, the second processing module 7202 is configured to perform at least one of the processing steps, etc. (e.g., step S2109, etc., but not limited thereto) executed by the terminal in any of the above methods, which will not be repeated here.

FIG. 8A is a schematic structural diagram of a communication device 8100 provided by an embodiment of the present disclosure. The communication device 8100 may be a network device (e.g., an access network device, a core network device, etc.), or may be a terminal (e.g., a user equipment, etc.), or may be a chip, chip system, or processor, etc. that supports a network device to implement any of the above methods, or may be a chip, chip system, or processor, etc. that supports a terminal to implement any of the above methods. The communication device 8100 can be used to implement the method described in the above method embodiments. For details, refer to the description in the above method embodiments.

As shown in FIG. 8A, the communication device 8100 includes one or more processors 8101. The processor 8101 may be a general-purpose processor or a special-purpose processor, etc., for example, may be a baseband processor or a central processor. The baseband processor may be used to process communication protocols and communication data. The central processor may be used to control the communication apparatus (e.g., a base station, a baseband chip, a terminal device, a terminal device chip, a DU, or a CU, etc.), execute programs, and process program data. The processor 8101 is used to invoke instructions to cause the communication device 8100 to perform any of the above methods.

In some embodiments, the communication device 8100 further includes one or more memories 8102 for storing instructions. Optionally, all or part of the memories 8102 may also be located outside the communication device 8100.

In some embodiments, the communication device 8100 further includes one or more transceivers 8103. When the communication device 8100 includes one or more transceivers 8103, the transceiver 8103 performs at least one of the communication steps such as sending and/or receiving, etc. (e.g., at least one of steps S2101 to S2106, but not limited thereto) in the above methods, and the processor 8101 performs at least one of other steps (e.g., at least one of steps S2101 to S2106, but not limited thereto) in the above methods.

In some embodiments, a transceiver may include a receiver and a transmitter. The receiver and the transmitter may be separate or integrated together. Optionally, terms such as transceiver, transceiver unit, transceiver machine, transceiver circuit, etc. can be used interchangeably. Terms such as transmitter, transmitter unit, transmitter machine, transmitter circuit, etc. can be used interchangeably. Terms such as receiver, receiver unit, receiver machine, receiver circuit, etc. can be used interchangeably.

Optionally, the communication device 8100 further includes one or more interface circuits 8104. The interface circuit 8104 is connected to the memory 8102. The interface circuit 8104 may be used to receive signals from the memory 8102 or other devices, and may be used to send signals to the memory 8102 or other devices. For example, the interface circuit 8104 may read instructions stored in the memory 8102 and send the instructions to the processor 8101.

The communication device 8100 described in the above embodiments may be a network device or a terminal, but the scope of the communication device 8100 described in the present disclosure is not limited thereto. The structure of the communication device may not be limited by FIG. 8A. The communication device may be an independent device or may be part of a larger device. For example, the communication device may be: (1) an independent integrated circuit (IC), or chip, or chip system or subsystem; (2) a set of one or more ICs, optionally, the IC set may also include storage components for storing data and computer programs; (3) an ASIC, such as a modem (Modem); (4) a module that can be embedded in other devices; (5) a receiver, terminal device, smart terminal device, cellular phone, wireless device, handset, mobile unit, vehicle-mounted device, network device, cloud device, artificial intelligence device, etc.; (6) others, etc.

FIG. 8B is a schematic structural diagram of a chip 8200 provided by an embodiment of the present disclosure. For the case where the communication device 8100 may be a chip or chip system, refer to the schematic structural diagram of the chip 8200 shown in FIG. 8B, but is not limited thereto.

The chip 8200 includes one or more processors 8201. The chip 8200 is used to perform any of the above methods.

In some embodiments, the chip 8200 further includes one or more interface circuits 8202. The interface circuit 8202 is connected to a memory 8203. The interface circuit 8202 may be used to receive signals from the memory 8203 or other devices. The interface circuit 8202 may be used to send signals to the memory 8203 or other devices. For example, the interface circuit 8202 may read instructions stored in the memory 8203 and send the instructions to the processor 8201.

In some embodiments, the interface circuit 8202 performs at least one of the communication steps such as sending and/or receiving, etc. (e.g., at least one of steps S2101 to S2106, but not limited thereto) in the above methods, and the processor 8201 performs at least one of other steps (e.g., at least one of steps S2101 to S2106, but not limited thereto) in the above methods.

In some embodiments, terms such as interface circuit, interface, transceiver pin, transceiver, etc. can be used interchangeably.

In some embodiments, the chip 8200 further includes one or more memories 8203 for storing instructions. Optionally, all or part of the memories 8203 may be located outside the chip 8200.

The present disclosure further proposes a storage medium, where the storage medium stores instructions which, when executed on the communication device 8100, cause the communication device 8100 to perform any of the above methods. Optionally, the storage medium is an electronic storage medium. Optionally, the storage medium is a computer-readable storage medium, but is not limited thereto, and it may also be a storage medium readable by other devices. Optionally, the storage medium may be a non-transitory storage medium, but is not limited thereto, and it may also be a transitory storage medium.

The present disclosure also proposes a program product, where the program product, when executed by the communication device 8100, causes the communication device 8100 to perform any of the above methods. Optionally, the program product is a computer program product.

The present disclosure also proposes a computer program which, when executed on a computer, causes the computer to perform any of the above methods.

## Claims

1. A method for processing information, comprising:
after a terminal receives a first signaling and determines that a hybrid automatic repeat request (HARQ) process is in an HARQ disabled state, determining that a state of the HARQ process is changed to an HARQ enabled state based on a second signaling received;
sending HARQ feedback information for the HARQ process; and
detecting a first transmission channel after sending the HARQ feedback information.

2. The method according to claim 1, wherein the first transmission channel is a physical downlink control channel (PDCCH).

3. The method according to claim 1 or 2, wherein the first signaling is a radio resource control (RRC) signaling, and the second signaling is downlink control information (DCI).

4. The method according to any one of claims 1 to 3, wherein detecting the first transmission channel after sending the HARQ feedback information comprises one of:
detecting the first transmission channel after an end time of sending the HARQ feedback information; or
detecting the first transmission channel after a first time following an end time of sending the HARQ feedback information.

5. The method according to claim 4, wherein the first time is agreed by a protocol, or the first time is configured by a network device.

6. The method according to claim 4 or 5, wherein the first time comprises at least one of:
a first duration;
at least one subframe;
at least one slot; or
at least one symbol.

7. The method according to any one of claims 1 to 6, further comprising one of:
determining the HARQ feedback information based on a demodulation result of a physical downlink shared channel (PDSCH) scheduled for a single time; or
determining the HARQ feedback information based on demodulation results of the PDSCH scheduled for multiple times within a second time.

8. The method according to claim 7, wherein determining the HARQ feedback information based on the demodulation result of the PDSCH scheduled for a single time comprises one of:
determining the HARQ feedback information comprising an acknowledgement (ACK) in a case where the PDSCH scheduled for a single time is successfully demodulated; or
determining the HARQ feedback information comprising a non acknowledgement (NACK) in a case where the PDSCH scheduled for a single time is unsuccessfully demodulated.

9. The method according to claim 7, wherein determining the HARQ feedback information based on the demodulation results of the PDSCH scheduled for multiple times within the second time comprises:
determining the HARQ feedback information comprising an ACK in a case where a probability of successfully demodulating the PDSCH scheduled for multiple times within the second time is greater than or equal to a threshold; or
determining the HARQ feedback information comprising a NACK in a case where a probability of successfully demodulating the PDSCH scheduled for multiple times within the second time is less than a threshold.

10. The method according to any one of claims 7 to 9, wherein the second time is agreed by a protocol, or the second time is configured by a network device.

11. The method according to any one of claims 1 to 10, wherein the HARQ feedback information is used for a network device to determine whether to adjust transmission configuration information, and the transmission configuration information comprises at least one of: a modulation and coding scheme (MCS), a transmission resource size or a transmission power.

12. The method according to any one of claims 1 to 11, further comprising one of:
determining first information based on a protocol agreement, wherein the first information is used to indicate a correspondence between the HARQ feedback information and transmission configuration information; or
receiving first information.

13. The method according to claim 12, wherein receiving the first information comprises one of:
receiving an RRC signaling, wherein the RRC signaling comprises the first information;
receiving a media access control (MAC) control element (CE), wherein the MAC CE comprises the first information; or
receiving a physical layer signaling, wherein the physical layer signaling comprises the first information.

14. A method for processing information, comprising:
sending, by a network device, a second signaling after sending a first signaling, wherein the first signaling is used for a terminal to determine that a hybrid automatic repeat request (HARQ) process is in an HARQ disabled state, and the second signaling is used for the terminal to determine that a state of the HARQ process is changed to an HARQ enabled state;
receiving HARQ feedback information for the HARQ process; and
sending data in a first transmission channel.

15. The method according to claim 14, wherein the first transmission channel is a physical downlink control channel (PDCCH).

16. The method according to claim 14 or 15, wherein the first signaling is radio resource control (RRC) signaling, and the second signaling is downlink control information (DCI).

17. The method according to any one of claims 14 to 16, further comprising: determining an adjustment of transmission configuration information for the terminal based on the HARQ feedback information.

18. The method according to any one of claims 14 to 17, wherein the HARQ feedback information comprises one of:
an acknowledgement (ACK) used to indicate that an adjustment of transmission configuration information is not needed; or
a non acknowledgement (NACK) used to indicate that an adjustment of transmission configuration information is needed.

19. The method according to any one of claims 14 to 18, further comprising:
sending first information, wherein the first information is used to indicate a correspondence between the HARQ feedback information and transmission configuration information.

20. The method according to claim 19, wherein sending the first information comprises one of:
sending an RRC signaling, wherein the RRC signaling comprises the first information;
sending a media access control (MAC) Control Element (CE), wherein the MAC CE comprises the first information; or
sending a physical layer signaling, wherein the physical layer signaling comprises the first information.

21. A method for processing information, comprising:
sending, by a network device, a second signaling after sending a first signaling;
after receiving the first signaling and determining that a hybrid automatic repeat request (HARQ) process is in an HARQ disabled state, determining by a terminal, based on the second signaling received, that a state of the HARQ process is changed to an HARQ enabled state;
sending, by the terminal, HARQ feedback information for the HARQ process to the network device;
sending, by the network device, data in a first transmission channel; and
detecting the first transmission channel by the terminal.

22. The method according to claim 21, wherein detecting the first transmission channel by the terminal comprises one of:
detecting, by the terminal, the first transmission channel after an end time of sending the HARQ feedback information; or
detecting, by the terminal, the first transmission channel after a first time following an end time of sending the HARQ feedback information.

23. A terminal, comprising:
a first processing module configured to, after receiving a first signaling and determining that a hybrid automatic repeat request (HARQ) process is in an HARQ disabled state, determine that a state of the HARQ process is changed to an HARQ enabled state based on a second signaling received; and
a first transceiver module configured to send HARQ feedback information for the HARQ process,
wherein the first processing module is further configured to detect a first transmission channel after sending the HARQ feedback information.

24. A network device, comprising a second transceiver module configured to:
send a second signaling after sending a first signaling, wherein the first signaling is used for a terminal to determine that a hybrid automatic repeat request (HARQ) process is in an HARQ disabled state, and the second signaling is used for the terminal to determine that a state of the HARQ process is changed to an HARQ enabled state;
receive HARQ feedback information for the HARQ process; and
send data in a first transmission channel.

25. A terminal, comprising:
one or more processors;
wherein the terminal is configured to perform the method for processing information according to any one of claims 1 to 13.

26. A network device, comprising:
one or more processors;
wherein the network device is configured to perform the method for processing information according to any one of claims 14 to 20.

27. A communication system, comprising: a terminal and a network device, wherein the terminal is configured to implement the method for processing information according to any one of claims 1 to 10, and the network device is configured to implement the method for processing information according to any one of claims 13 to 20.

28. A computer storage medium, having stored therein instructions that, when running on a communication device, cause the communication device to perform the method for processing information according to any one of claims 1 to 13, or claims 14 to 20, or claims 21 to 22.
